# DEMANDE DE BREVET EUROPEEN

(11) **EP 0 525 469 A2**
(43) Date de publication de la demande: **03.02.1993**
(21) Numéro de dépôt: 92111716.4
(22) Date de dépôt: 09.07.1992
(51) Int. Cl.: B23K 9/167, B23K 9/02

(54) **Procédé de soudage bout à bout de deux extrémités de tube, et dispositif pour sa mise en oeuvre**

(30) Priorité: 11.07.1991 FR 9108734
(71) Demandeur: STEIN INDUSTRIE Société Anonyme dite:, F-78140 Vélizy Villacoublay (FR)
(72) Inventeur: Alba, Dominique, F-59370 Mons en Barroeul (FR); Cloquet, Alain, F-59390 Lys lez Lannoy (FR); Bonnand, Christian, F-59830 Bachy (FR); Markey, Joseph, B-7730 Nechin (BE)
(74) Mandataire: Weinmiller, Jürgen

(57) **Abrégé**

La présente invention concerne un procédé de soudage bout à bout de deux extrémités de tubes (1, 2) par fusion à l'arc sous gaz inerte d'un métal d'apport entre les faces d'extrémité de ces tubes, à l'aide d'une électrode non consommable, caractérisé en ce que l'on creuse au préalable les faces d'extrémité des tubes d'épaulements en vis-à-vis (3, 5 ; 4, 6), en ce que l'on dispose dans la rainure formée par ces épaulements une bague calibrée (7) d'épaisseur longitudinale légèrement inférieure à la distance séparant les faces des épaulement perpendiculaires à l'axe commun des tubes, et de largeur radiale notablement supérieure à la profondeur des épaulements, formant le métal d'apport.

Un tel procédé est d'exécution plus facile et plus rapide et procure une soudure plus régulière et d'excellente qualité, avec un désaxage très faible des tubes soudés en bout.

## Description

La présente invention concerne un procédé de soudage bout à bout de deux extrémités de tube, par fusion à l'arc sous gaz inerte d'un métal d'apport entre les faces d'extrémité de ces tubes, à l'aide d'une électrode non consommable.

Elle s'étend en outre à un dispositif de mise en oeuvre de ce procédé.

On effectue généralement ce genre de soudage à l'aide d'une tête rotative comportant, outre l'électrode non consommable d'où jaillit l'arc, un fil d'apport arrivant à proximité des faces en regard des tubes, préalablement chanfreinées sur une partie externe de leur épaisseur. Ce fil d'apport est amené à la zone de soudage à travers une gaine de plusieurs mètres de longueur. Il se produit fré- quemment un freinage du fil d'apport par contact avec la gaine, occasionnant des irrégularités de joint de soudure. Par ailleurs, le point impact du fil d'apport dans le bain de métal fondu peut subir des variations dues à la torsion naturelle du fil, qu'accentuent ces irrégularités.

La présente invention a pour but de procurer un procédé de soudage en bout de deux extrémités du tube qui soit d'exécution plus facile et plus rapide et qui procure une soudure plus régulière et d'excellente qualité, avec un désaxage très faible des tubes soudés en bout.

Le procédé de l'invention est caractérisé en ce que l'on creuse au préalable les faces d'extrémité des tubes d'épaulements en vis-à-vis, en ce que l'on dispose dans la rainure formée par ces épaulements une bague calibrée d'épaisseur longitudinale légèrement inférieure à la distance séparant les faces des épaulements perpendiculaires à l'axe commun des tubes, et de largeur radiale notablement supérieure à la profondeur des épaulements, formant le métal d'apport.

Les épaulements creusés dans les faces d'extrémité des tubes comportent de préférence une face parallèle à l'axe des tubes et une face perpendiculaire à cet axe.

Avantageusement, la section droite de la bague dans un plan contenant l'axe des tubes est rectangulaire et de grand côté perpendiculaire à cet axe.

Le dispositif de mise en oeuvre du procédé ci- dessus défini est caractérisé en ce qu'il comprend une bague calibrée insérée entre des épaulements en vis-à-vis des extrémités des tubes d'épaisseur longitudinale légèrement inférieure à la distance séparant les faces radiales des épaulements et de largeur radiale notablement supérieure à la profondeur de la gorge définie par les épaulements, et une tête de soudage à électrode non consommable sous gaz inerte, rotative autour de la bague.

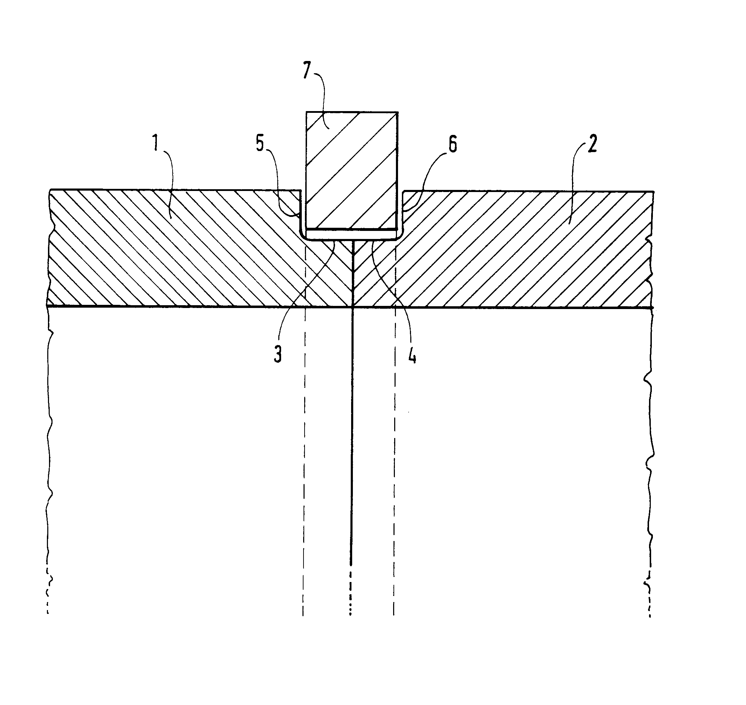

Il est décrit ci-après, à titre d'exemple et en référence à la figure unique du dessin annexé, un procédé et un dispositif selon l'invention.

On commence par creuser dans une zone externe des faces d'extrémité des tubes 1 et 2 à assembler, supposés ici circulaires, représentés en demi-coupe diamétrale, des épaulements présentant chacun une face cylindrique 3, 4 parallèle à l'axe commun des tubes à assembler, et une face plane 5, 6 perpendiculaire à cet axe.

On usine alors une bague circulaire 7 à faces planes, d'épaisseur légèrement inférieure à la largeur séparant les épaulements des deux tubes, et de largeur radiale notablement supérieure à la profondeur de la gorge délimitée par les épaulements, et par exemple triple de celle de cette gorge (on utilise une bague calibrée déjà approvisionnée choisie en fonction des diamètre et épaisseur des tubes à souder). On amène alors en butée l'une sur l'autre les zones internes des faces d'extrémité des tubes, avec cette bague dans la gorge.

On effectue alors le soudage de cette bague et des faces des extrémités des tubes à l'aide d'une tête rotative de soudage à électrode non consommable (tungstène) sous gaz inerte tel que l'argon, mais sans fil d'apport, de type connu. Des essais effectués conformément à l'invention ont montré que l'on obtenait un cordon de soudure plus régulier que par le procédé connu, avec un défaut d'alignement des axes des tubes soudés ne dépassant pas 0,15 mm, en un temps d'exécution inférieur d'environ 40%.

## Revendications

1. Procédé de soudage bout à bout de deux extrémités de tubes (1, 2) par fusion à l'arc sous gaz inerte d'un métal d'apport entre les faces d'extrémité de ces tubes, à l'aide d'une électrode non consommable, caractérisé en ce que l'on creuse au préalable les faces d'extrémité des tubes d'épaulements en vis-à-vis (3, 5 ; 4, 6), en ce que l'on dispose dans la rainure formée par ces épaulements une bague calibrée (7) d'épaisseur longitudinale légèrement inférieure à la distance séparant les faces des épaulements perpendiculaires à l'axe commun des tubes, et de largeur radiale notablement supérieure à la profondeur des épaulements, formant le métal d'apport.

2. Procédé selon la revendication 1, caractérisé en ce que les épaulements creusés dans les faces d'extrémité des tubes comportent une face (3 ; 4) parallèle à l'axe des tubes, et une face (5 ; 6) perpendiculaire à cet axe.

3. Procédé selon la revendication 2, caractérisé en ce que la section droite de la bague (7) dans un plan contenant l'axe des tubes est rectangulaire et de grand côté perpendiculaire à cet axe.

4. Dispositif de soudage, bout à bout de deux extrémités de tube par le procédé selon l'une des revendications 1 à 3, caractérisé en ce qu'il comprend une bague calibrée (7) insérée entre des épaulements en vis-à-vis (3, 5 ; 4, 6) des extrémités des tubes (1, 2), d'épaisseur longitudinale légèrement inférieure à la distance séparant les faces radiales (5, 6) des épaulements et de largeur radiale notablement supérieure à la profondeur de la gorge définie par les épaulements, et une tête de soudage à électrode non consommable sous gaz inerte, rotative autour de la bague.
